Europäisches Patentamt

European Patent Office

Office européen des brevets

(11) Veröffentlichungsnummer : **0 157 265**
**B1**

(12) EUROPÄISCHE PATENTSCHRIFT

(45) Veröffentlichungstag der Patentschrift :
09.08.89

(21) Anmeldenummer : 85103065.0

(22) Anmeldetag : 16.03.85

(51) Int. Cl.⁴ : **B 01 D 35/14**

(54) **Filter.**

(30) Priorität : 02.04.84 DE 3412199

(43) Veröffentlichungstag der Anmeldung :
09.10.85 Patentblatt 85/41

(45) Bekanntmachung des Hinweises auf die Patenterteilung : 09.08.89 Patentblatt 89/32

(84) Benannte Vertragsstaaten :
AT FR GB IT NL SE

(56) Entgegenhaltungen :
EP—A— 0 070 508
FR—A— 1 360 429
Die Akte enthält technische Angaben, die nach dem
Eingang der Anmeldung eingereicht wurden und die
nicht in dieser Patentschrift enthalten sind.

(73) Patentinhaber : ARGO G.M.B.H. für Feinmechanik
D-7527 Kraichtal-Menzingen (DE)

(72) Erfinder : Bernhard, Hermann
Holbinsenstrasse 2
D-6921 Angelbachtal (DE)

(74) Vertreter : Hoeger, Stellrecht & Partner
Uhlandstrasse 14 c
D-7000 Stuttgart 1 (DE)

## Beschreibung

Die Erfindung betrifft ein Filter mit einem topfförmigen Gehäuse mit den Merkmalen des Oberbegriffes des Patentanspruches 1.

Ein solches Filter ist aus der US-Patentschrift 3 985 652 bekannt. Ein solches Filter ermöglicht den Betrieb in entgegengesetzten Durchflußrichtungen. Die bei dem bekannten Filter verwendeten Verschlußkörper bestehen aus zwei konzentrisch ineinander geführten Hülsen, die durch eine Feder auseinandergedrückt werden. Bei der bekannten Filteranordnung besteht jedoch die Gefahr, daß bei kleineren Druckdifferenzen der Verschlußkörper auf der Auslaßseite gar nicht oder nur so geringfügig öffnet, daß erhebliche Druckverluste in Kauf genommen werden müssen.

Ein ähnliches, bidirektional arbeitendes Filter ist aus der europäischen Offenlegungsschrift 70 508 bekannt. Das Filter weist einen zylindrischen Umschaltkörper auf, der schwimmend im Filterkopf gelagert ist. Dies bedingt eine seitliche Einleitung des gefilterten Mediums und eine wiederholte Umlenkung, die nicht nur die Herstellung des Filterkopfes erschwert sondern auch den Durchflußwiderstand erhöht.

Ausgehend von der Filterkonstruktion der US-Patentschrift 3 985 652 liegt der Erfindung die Aufgabe zugrunde, ein solches Filter zu verbessern.

Diese Aufgabe wird bei einem Filter der eingangs beschriebenen Art erfindungsgemäß dadurch gelöst, daß der zweite Ventilkörper als Ventilteller ausgebildet ist, der in der ersten Stellung eine das Innere des ersten Ventilkörpers mit der zentralen Kammer verbindende Durchgangsöffnung im Boden des ersten Ventilkörpers verschließt und in Richtung von der zentralen Kammer zum jeweiligen Anschluß hin entgegen der Kraft der Feder zu öffnen ist, und daß zwischen den beiden ersten Ventilkörpern eine sich mit ihren Enden an beiden ersten Ventilkörpern abstützende Feder angeordnet ist, welche die ersten Ventilkörper in ihre jeweils erste Stellung auseinanderdrückt.

Die Verwendung eines tellerförmigen Ventilkörpers führt zu einer Vereinfachung der Konstruktion.

Bei der bevorzugten Ausführungsform ist vorgesehen, daß der Verschlußkörper einen achsparallelen Führungsbolzen trägt, auf dem der zweite Ventilkörper verschieblich gelagert ist und an dem sich die Druckfeder abstützt.

Günstig ist es weiterhin, wenn in die Anschlüsse ein Ring eingesetzt ist, der einen Dichtsitz für den Rand des Verschlußkörpers und somit einen Anschlag für die Verschiebung des Verschlußkörpers bildet.

Der Ring kann dabei den verschieblich gelagerten Verschlußkörper zumindest teilweise umgeben und eine Führung für die Verschiebebewegung des Verschlußkörpers bilden.

Die nachfolgende Beschreibung bevorzugter Ausführungsformen der Erfindung dient im Zusammenhang mit der Zeichnung der näheren Erläuterung. Es zeigen :

Fig. 1 eine Schnittansicht eines Filterkopfes mit je einem doppelt wirkenden Verschlußkörper im Einlaß und im Auslaß;

Fig. 2 eine Ansicht ähnlich Fig. 1 in einer ersten Durchflußrichtung und

Fig. 3 eine Ansicht ähnlich Fig. 2 in der entgegengesetzten Durchflußrichtung.

Das in der Zeichnung dargestellte Filter umfaßt ein topfförmiges Gehäuse 1, auf welches ein Filterkopf 2 aufgeschraubt ist. Eine Ringdichtung 3 sorgt für die Abdichtung zwischen Gehäuse und Filterkopf. Der Filterkopf weist eine diametral durchgehende Bohrung 4 auf, die eine zentrale Kammer 5 im Filterkopf durchsetzt. Zu beiden Seiten dieser zentralen Kammer ist eine Ringnut 6 bzw. 7 in die Wand der Durchgangsbohrung 4 eingelassen, die beide — ebenso wie die zentrale Kammer 5 — zum Gehäuse 1 hin offen sind.

Die durchgehende Bohrung 4 erweitert sich an ihren beiden Enden 8 und 9 unter Ausbildung je einer Stufe 10 bzw. 11. In die Enden der Bohrung 4 sind Anschlußstücke 12 und 13 eingeschraubt, die mit einem hülsenförmigen Teil 14 bzw. 15 fast bis zum kammerseitigen Ende der Umfangsnut 6 bzw. 7 ragen. Im Bereich der Umfangsnut 6 und 7 befinden sich eine Anzahl von Durchbrechungen in dem hülsenförmigen Teil 14 und 15, so daß der Innenraum des hülsenförmigen Teils 14, bzw. 15 mit der Umfangsnut 6 bzw. 7 in Verbindung steht. Die Enden der Bohrung 4 sind mittels Ringdichtungen 16 und 17 gegenüber der Außenwand der Anschlußstücke 12 und 13 abgedichtet. Die Anschlußstücke weisen je ein Innengewinde 18 bzw. 19 auf, in welche in der Zeichnung nicht dargestellte Anschlußleitungen eingeschraubt werden können.

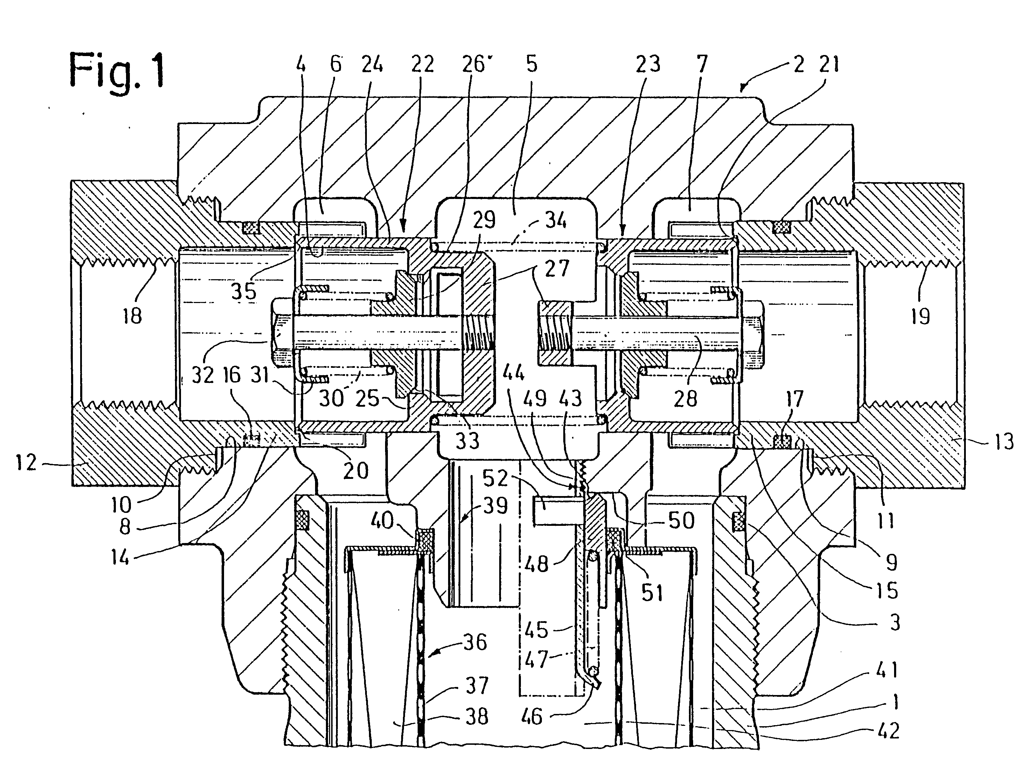

Am jeweils außenliegenden Ende der Umfangsnuten 6 und 7 bilden die Anschlußstücke 12 und 13 eine Ringschulter 20 bzw. 21, die einen Ventilsitz für einen in der Bohrung 4 achsparallel verschieblich gelagerten, hülsenförmigen Verschlußkörper 22 bzw. 23 bilden. Die beiden Verschlußkörper 22 und 23 sind vollständig gleich aufgebaut, im folgenden wird daher nur der in Fig. 1 in der linken Position dargestellte Verschlußkörper näher erläutert. Dieser Verschlußkörper weist einen an der Innenwand der Bohrung 4 und im Bereich der Umfangsnut 6 an der Innenwand des hülsenförmigen Teils 14 des Anschlußstückes 12 anliegenden, kreiszylindrischen ersten Ventilkörper auf, der sich von dem außenliegenden Ende der Umfangsnut 6 bis zu dem Einlaß der zentralen Kammer 5 erstreckt. In diesem Bereich weist der erste Ventilkörper 24 einen Boden 25 auf, in dem sich eine Durchgangsöffnung 26 befindet, die den Innenraum des ersten Ventilkörpers 24 mit der zentralen Kammer 5 verbindet. Die Durchgangsöffnung 26 wird von einem U-förmigen, in die zentrale Kammer 5 hineinragenden Steg 27 überbrückt, in den ein achsparalleler Führungsbolzen 28 eingeschraubt ist, der sich im wesentlichen bis zum gegenüberliegenden Ende der Hülse erstreckt. Auf diesem Führungsbolzen 28 ist ein tellerförmiger, zweiter Ventilkörper 29 parallel zur Bohrung 4 verschieblich gelagert, der durch eine sich an ihm abstützende, den Führungsbolzen 28 umgebende Druckfeder 30 gegen die Durchgangsöffnung 26 gedrückt wird. Die Druckfeder 30 stützt sich mit ihrem anderen Ende über eine Kappe 31 am Kopf 32 des Führungsbolzens 28 ab. Der zweite Ventilkörper 29, der Führungsbolzen 28, die Druckfeder 30 und die Kappe 31 befinden sich weitgehend im Inneren des ersten Ventilkörpers 24 des Verschlußkörpers 22.

Der die Durchgangsöffnung 26 umgebende Rand 33 bildet einen Ventilsitz für den zweiten Ventilkörper 29, der normalerweise unter der Kraft der Druckfeder 30 die Durchgangsöffnung 26 verschließt.

Im Innern der zentralen Kammer 5 befindet sich eine weitere Druckfeder 34, die sich am Boden der beiden Verschlußkörper 22 und 23 abstützt und diese somit auseinanderschiebt. Dabei wird der gegenüberliegende freie Rand 35, der schneidenförmig ausgebildet ist, gegen die Ringschulter 20 gedrückt, die einen mit dem Rand 35 zusammenwirkenden Ventilsitz bildet. Wenn der Rand 35 an der Ringschulter 20 anliegt, ist der Innenraum des Anschlußstückes 12 gegenüber der Umfangsnut 6 abgedichtet, wie dies in Fig. 1 bei beiden Verschlußkörpern 22 und 23 der Fall ist. Die beiden Verschlußkörper 22 und 23 sind im übrigen in der Darstellung der Fig. 1 um 90° verdreht dargestellt, so daß man erkennen kann, daß neben dem Steg 27 bei geöffnetem zweiten Ventilkörper 29 eine Verbindung des Innenraums des ersten Ventilkörpers 24 mit der zentralen Kammer 5 gegeben ist.

Durch die Anlage der Außenwand des ersten Ventilkörpers 24 an der zurückgesetzten Innenwand des Anschlußstückes 12 ergibt sich eine Führung des Verschlußkörpers 22 in der Bohrung 4, wenn der Verschlußkörper entgegen der Wirkung der Druckfeder 34 verschoben wird.

Im Innern des topfförmigen Gehäuses 1 ist ein zylindrischer Filtereinsatz 36 mit einem zylindrischen Lochblech 37 angeordnet, wobei das Lochblech 37 von einer ziehharmonikaartig gefalteten Filterlage 38 umgeben ist. Der Filtereinsatz ist auf der unteren Seite in aus der Zeichnung nicht ersichtlichen Weise dicht abgeschlossen, auf der Oberseite ist er offen. In diese offene Oberseite ist ein von der zentralen Kammer 5 nach unten vorstehender Rohrstutzen 39 des Filterkopfes 2 eingeschoben, wobei im Verbindungsbereich durch eine Ringdichtung 40 eine Abdichtung erfolgt. Der Aufbau des Rohrstutzens 39 ergibt sich in Fig. 1 aus dem links der strichpunktierten Mittelachse dargestellten Bereich. Der Filtereinsatz trennt den Innenraum des Gehäuses 1 in einen den Filtereinsatz umgebenden, äußeren Ringraum 41 und in einen Innenraum 42. Der äußere Ringraum 41 steht mit den beiden Umfangsnuten 6 und 7 in Verbindung, der Innenraum 42 über den Rohrstutzen 39 mit der zentralen Kammer 5. Der Rohrstutzen 39 verhindert eine Verbindung zwischen dem äußeren Ringraum 41 und dem Innenraum 42.

In den Figuren 1, 2 und 3 ist rechts der strichpunktierten Mittellinie des Rohrstutzens 39 noch eine bevorzugte Ausführungsform dargestellt, bei welcher die zentrale Kammer 5 nach unten mit einer mit einem Innengewinde 43 versehenen Öffnung 44 abschließt. In dieses Innengewinde ist ein Rohrstück 45 eingeschraubt, das am unteren Ende einen nach außen abstehenden Rand 46 aufweist. Das Rohrstück 45 ist von einer Druckfeder 47 umgeben, deren eines Ende sich am Rand 46 und deren anderes Ende sich an einer Ventilhülse 48 abstützt, die das Rohrstück 45 ebenfalls konzentrisch umgibt und auf dieser längsverschieblich gelagert ist. Diese Ventilhülse weist einen keilförmigen Rand 49 auf, der normalerweise unter der Wirkung der Druckfeder 47 gegen eine die Öffnung 44 umgebende, ebene Dichtfläche 50 gedrückt wird. An der Außenseite der Ventilhülse 48 liegt die Ringdichtung 40 an, die die Ventilhülse 48 gegenüber dem Filtereinsatz 36 abdichtet. Das Rohrstück 45 weist in dem normalerweise von der Ventilhülse 48 abgedeckten Bereich am Umfang umlaufende Durchtrittsschlitze 52 auf.

Im Betrieb wird ein zu filterndes Medium beispielsweise über das Anschlußstück 12 dem Filter zugeführt. Das unter Druck stehende Medium verschiebt den Verschlußkörper 22 entgegen der Wirkung der Feder 34, so daß der Rand 35 von der Ringschulter 20 abgehoben wird. Das zu filtrierende Medium kann durch den Spalt zwischen der Ringschulter 20 und dem Rand 35 in den äußeren Ringraum 41 gelangen und tritt anschließend durch die Filterlage 38 in den Innenraum 42 des Filtereinsatzes ein. Von dort gelangt das nunmehr gereinigte Medium durch den Rohrstutzen 39 oder durch das Rohrstück 45 in die zentrale Kammer 5 und verschiebt den zweiten Ventilkörper 29 des zweiten Verschlußkörpers 23 entgegen der Wirkung der Feder 30 in die Offenstellung, so daß das Medium aus der zentralen Kammer 5 über das Anschlußstück 13 strömen kann. Dabei verschließt der zweite Ventilkörper 29 die Öffnung 26 im ersten Verschlußkörper 22.

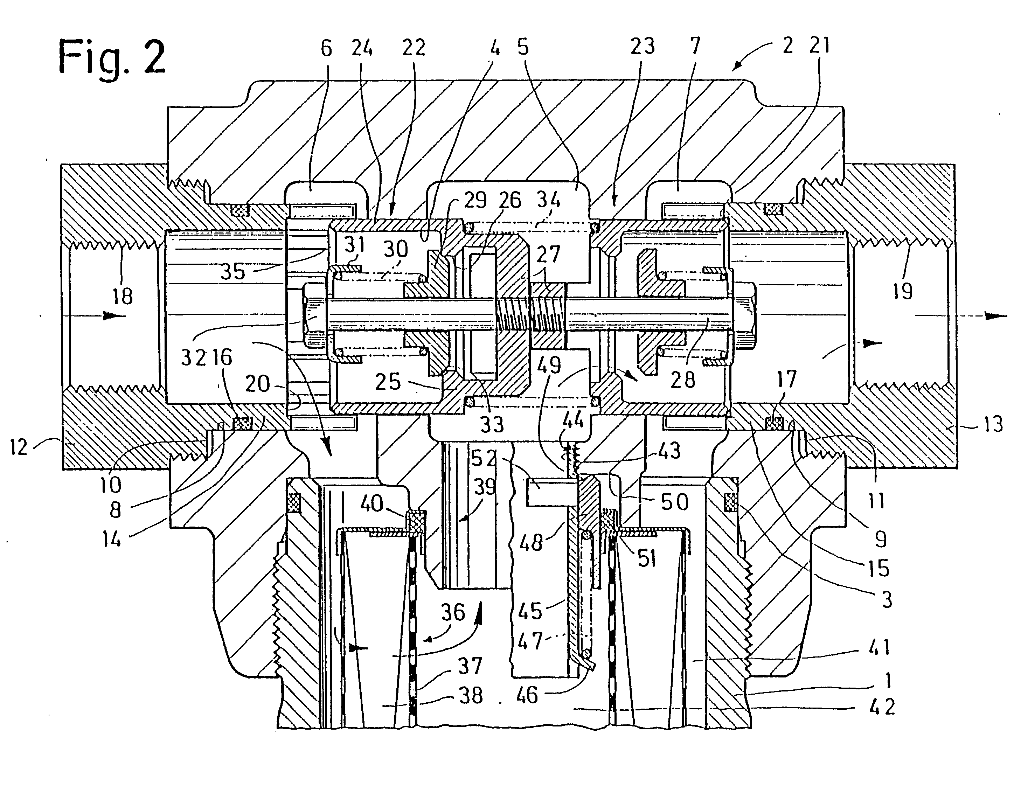

Der zweite Verschlußkörper 23 wird bei dieser Betriebsweise durch die Feder 34 gegen die Ringschulter 21 gedrückt, so daß der äußere Ringraum 41 gegenüber dem Innenraum des Anschlußstückes 13 abgedichtet ist. Diese Betriebsweise ist in Fig. 2 dargestellt.

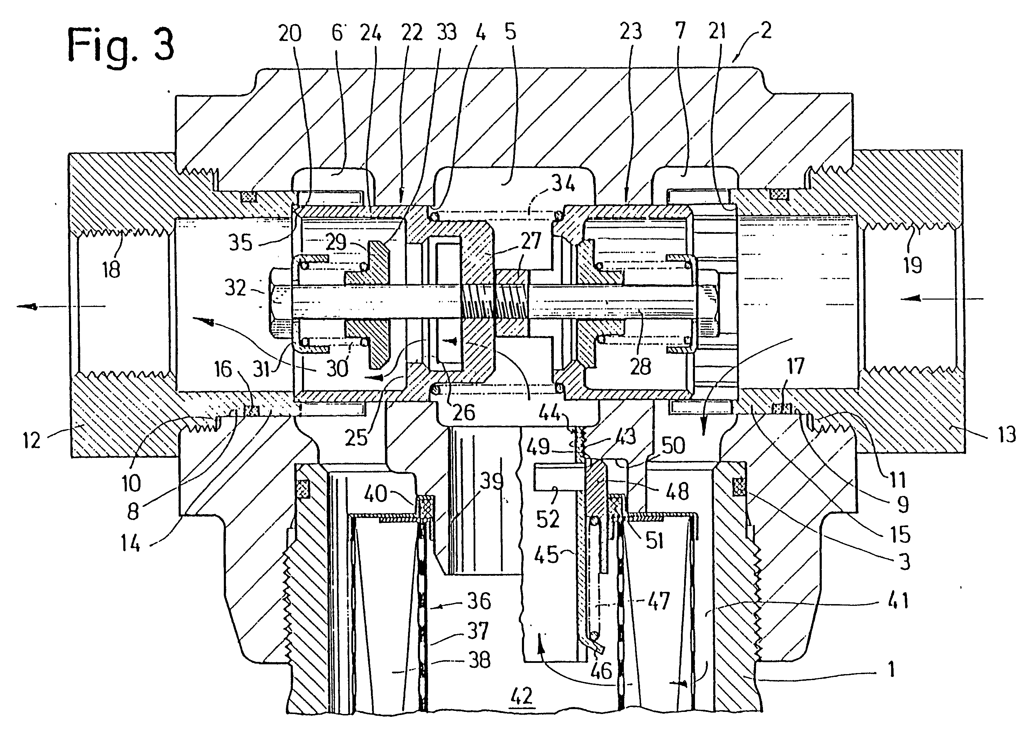

In Fig. 3 wird der Filterkopf in der umgekehrten Richtung durchströmt. Infolge des vollständig symmetrischen Aufbaus ergibt sich dabei der mit Pfeilen eingezeichnete umgekehrte Strömungsweg, d. h., das in den Figuren 1 bis 3 dargestellte Filter ist in beiden Richtungen als Filter voll funktionsfähig, das zu filtrierende Medium tritt in beiden Durchflußrichtungen aus dem jeweiligen als Einlaß wirkenden Anschlußstück in den äußeren Ringraum 41 ein, gelangt von dort durch die Filterlage 38 in den Innenraum 42 und von dort über die zentrale Kammer und die freigegebene Öffnung 26 in das als Auslaß wirkende Anschlußstück.

Die Ventilhülse 48 wirkt als Bypass-Ventil, wenn der Durchflußwiderstand des zu filtrierenden Mediums durch den Filtereinsatz zu groß wird. In diesem Falle steigt der Druck im äußeren Ringraum 41 so weit an, daß die Ventilhülse 48 entgegen der Wirkung der Feder 47 verschoben wird und somit die Schlitze 52 freigibt. Das zu filtrierende Medium gelangt dann aus dem äußeren Ringraum 41 unter Umgehung der Filterlage 38 direkt in den Innenraum 42.

## Patentansprüche

1. Filter mit einem topfförmigen Gehäuse (1), einem dieses verschließenden Filterkopf (2) mit zwei als Einlaß bzw. Auslaß für ein zu filtrierendes Medium dienenden Anschlüssen (12, 13), mit einem Filtereinsatz (36), der im Gehäuse (1) angeordnet ist und diesen in einen äußeren Ringraum (41) und in einen Innenraum (42) unterteilt, wobei der äußere Ringraum (41) mit den beiden Anschlüssen (12, 13) in Verbindung steht, mit einer zentralen Kammer (5) im Filterkopf (2), die sich oberhalb des Filtereinsatzes (36) befindet und sowohl mit dem Innenraum (42) als auch über eine Bohrung (4) mit den beiden Anschlüssen (12, 13) in Verbindung steht, mit je einem in der Bohrung (4) und im je einem Anschluß (12, 13) angeordneten Verschlußkörper (22, 23), der einen ersten in der Bohrung (4) abgedichteten längsverschieblichen, hülsenförmigen Ventilkörper (24), welcher in einer ersten Stellung die Verbindungsöffnung zwischen dem Anschluß (12, 13) einerseits und dem Ringraum (41) andererseits schließt, während er diese Verbindungsöffnung in einer zweiten Stellung freigibt, sowie einen zweiten, im ersten Ventilkörper (24) verschieblich gelagerten, zweiten Ventilkörper (29) umfaßt, welcher durch eine sich einerseits am ersten und andererseits am zweiten Ventilkörper (24 bzw. 29) abstützende Feder (30) in eine erste Stellung verschoben wird, in der die Verbindungsöffnung zwischen dem ersten Ventilkörper (24) und der zentralen Kammer (5) geschlossen ist, und welcher entgegen der Wirkung der Feder (30) in eine diese Verbindungsöffnung freigebende Stellung verschiebbar ist, dadurchgekennzeichnet, daß der zweite Ventilkörper (29) als Ventilteller ausgebildet ist, der in der ersten Stellung eine das Innere des ersten Ventilkörpers (24) mit der zentralen Kammer (5) verbindende Durchgangsöffnung (26) im Boden (25) des ersten Ventilkörpers (24) verschließt und in Richtung von der zentralen Kammer (5) zum jeweiligen Anschluß hin entgegen der Kraft der Feder (30) zu öffnen ist, und daß zwischen den beiden ersten Ventilkörpern (24) eine sich mit ihren Enden an beiden ersten Ventilkörpern (24) abstützende Feder (34) angeordnet ist, welche die ersten Ventilkörper (24) in ihre jeweils erste Stellung auseinanderdrückt.

2. Filter nach Anspruch 1, dadurch gekennzeichnet, daß der Verschlußkörper (22, 23) einen achsparallelen Führungsbolzen (28) trägt, auf dem der zweite Ventilkörper (29) verschieblich gelagert ist und an dem sich die Druckfeder (30) abstützt.

3. Filter nach einem der Ansprüche 1 oder 2, dadurch gekennzeichnet, daß in die Anschlüsse (12, 13) ein Ring (hülsenförmiger Teil 14, 15) eingesetzt ist, der einen Dichtsitz (Ringschulter 20) für den Rand (35) des Verschlußkörpers (22, 23) und somit einen Anschlag für die Verschiebung des Verschlußkörpers (22, 23) bildet.

4. Filter nach Anspruch 3, dadurch gekennzeichnet, daß der Ring (hülsenförmiger Teil 14, 15) den verschieblich gelagerten Verschlußkörper (22, 23) zumindest teilweise umgibt und eine Führung für die Verschiebebewegung des Verschlußkörpers (22, 23) bildet.

## Claims

1. A filter with a pot-shaped casing (1), a filter head (2) which closes the latter and which has two connexions (12, 13) acting as the inlet and outlet respectively for a medium to be filtered, a filter insert (36) which is arranged in the casing (1) and divides it into an outer annular space (41) and an inner annular space (42), the outer annular space (41) being connected to the two connexions (12, 13), a central chamber (5) in the filter head (2), which [(central chamber (5)] is arranged above the filter insert (36) and is connected both to the inner space (42) and by way of a bore (4) to the two connexions (12, 13), closure members (22, 23) each of which is arranged in the bore (4) and in one connexion (12, 13) in each case and which [comprises ?] a first longitudinally displaceable sleeveshaped valve member (24), which is sealed in the bore (4) and which in a first position closes the connecting opening between the connexion (12, 13) on the one hand and the annular space (41) on the other hand, while in a second position it clears the said connecting opening, and embraces a second valve member (29) which is displaceably mounted in the first valve member (24) and which is pushed by a spring (30) supported at one end on the first valve member (24) and at the other end on the second valve member (29) into a first position in which the connecting opening between the first valve member (24) and the central chamber (5) is closed, and which (second valve member (29) is displaceable against the action of the spring (30) into a position which clears the said connecting opening, characterized in that the second valve member (29) is constructed as a valve disc which in the first position closes a through opening (26) — connecting the interior of the first valve member (24) to the central chamber (5) — in the base (25) of the first valve member (24) and is to be opened in the direction from the central chamber (5) to the respective connexion against the force of the spring (30), and a spring (34), which is supported by its ends on the two first valve members (24) and which presses apart the first valve members (24) into their first position in each case, is arranged between the two first valve members (24).

2. A filter according to Claim 1, characterized in that the closure member (22, 23) carries an axially parallel guide pin (28) on which the second valve member (29) is displaceably mounted and on which the compression spring (30) is supported.

3. A filter according to one of Claims 1 or 2, characterized in that a ring (sleeve-shaped member 14, 15), which forms a sealed seating (annular shoulder 20) for the edge (35) of the closure member (22, 23) and thus forms a stop for the displacement of the closure member (22, 23), is inserted in the connexions (12, 13).

4. A filter according to claim 3, characterized in that the ring (sleeveshaped member 14, 15) at least partly surrounds the displaceably mounted closure member (22, 23) and forms a guide for the displacement movement of the closure member (22, 23).

**Revendications**

1. Filtre comportant : une enceinte en forme de pot (1) ; une tête de filtre (2) fermant cette enceinte et munie de deux raccords (12, 13) servant d'entrée ou, selon le cas, de sortie pour un fluide à filtrer ; une cartouche filtrante (36) qui est agencée dans l'enceinte (1) qu'elle partage en un volume annulaire extérieur (41) et en un volume intérieur (42), le volume annulaire extérieur (41) étant en communication avec les deux raccords (12, 13) ; une chambre centrale (5) dans la tête de filtre (2), cette chambre se trouvant au-dessus de la cartouche filtrante (36) et communiquant avec le volume intérieur (42) ainsi qu'avec les deux raccords (12, 13) via un trou (4) ; des corps obturateurs (22, 23) agencés dans le trou (4), chacun dans un raccord (12, 13), ce corps obturateur comportant un premier corps-soupape (24) en forme de douille pouvant coulisser longitudinalement en condition d'étanchéité dans le trou, ce corps-soupape fermant, dans une première position, l'ouverture de communication entre le raccord (12, 13) d'une part et le volume annulaire (41) d'autre part, tandis que, dans une deuxième position, il libère cette ouverture de communication, ledit corps obturateur comprenant aussi, monté coulissant dans le premier corps-soupape (24), un deuxième corps-soupape (29) qui, par un ressort (30) prenant appui d'un côté contre le premier et de l'autre côté contre le deuxième corps-soupape (respectivement 24, 29), est déplacé à une première position dans laquelle l'ouverture de communication entre le premier corps-soupape (24) et la chambre centrale (5) est fermée, et qui, contre l'action du ressort (30), peut être amené à une position libérant cette ouverture de communication, caractérisé par le fait que le deuxième corps-soupape (29) est réalisé en tant que plateau de soupape qui, dans la première position, ferme une ouverture de passage (26) dans le fond (25) du premier corps-soupape (24), laquelle relie l'intérieur du premier corps-soupape (24) à la chambre centrale (5), et qui, dans le sens allant de la chambre centrale (5) vers le raccord concerné, ouvre contre la force du ressort (30), et par le fait qu'entre les deux premiers corps-soupapes (24) est agencé un ressort (34) qui, par ses deux extrémités, prend appui contre les deux premiers corps-soupapes (24) et qui pousse les premiers corps-soupapes (24), chacun à sa première position, dans le sens de leur éloignement mutuel.

2. Filtre selon revendication 1, caractérisé par le fait que le corps obturateur (22, 23) porte une tige de guidage (28) parallèle à l'axe, sur laquelle le deuxième corps-soupape (29) est monté à coulissement et sur laquelle le ressort de compression (30) prend appui.

3. Filtre selon l'une des revendications 1 ou 2, caractérisé par le fait qu'un anneau (partie en forme de douille 14, 15) est inséré dans les raccords (12, 13) et constitue un siège d'étanchéité (épaulement annulaire 20) pour le bord (35) du corps obturateur (22, 23), et constitue ainsi une butée pour le déplacement du corps obturateur (22, 23).

4. Filtre selon revendication 3, caractérisé par le fait que l'anneau (partie en forme de douille 14, 15) entoure au moins partiellement le corps obturateur (22, 23) monté à coulissement et constitue un guide pour le mouvement de coulissement du corps obturateur (22, 23).

Fig. 1

Fig. 2

# Fig. 3

EP 0 157 265 B1